# EUROPEAN PATENT APPLICATION

(11) **EP 2 581 900 A2**
(43) Date of publication of application: **17.04.2013**
(21) Application number: 12186455.7
(22) Date of filing: 27.09.2012
(51) Int. Cl.: G09G 5/00

(54) **Image output apparatus and method for outputting image thereof**

(30) Priority: 14.10.2011 KR 20110105492
(71) Applicant: Samsung Electronics Co., Ltd., Suwon-si, Gyeonggi-do, 443-742 (KR)
(72) Inventor: Lee, Kyu-chan, Gyeonggi-do (KR); Kim, Sung-soo, Gyeonggi-do (KR); Jo, Young-hun, Seoul (KR); Seong, Hwa-seok, Gyeonggi-do (KR)
(74) Representative: Fearnside, Andrew Simon

(57) **Abstract**

An image output apparatus and a method for outputting an image thereof are provided. The method of the image output apparatus determines whether a difference in grayscale values between a current image frame and a previous image frame is greater than or equal to a pre-set value, if the difference in the grayscale values is greater than or equal to the pre-set value, at least one of a maximum grayscale value and a minimum grayscale value of the current image frame is adjusted, a grayscale of the current image frame according to an input and output grayscale function having the adjusted maximum grayscale value and minimum grayscale value is adjusted and an image is output. Accordingly, a crosstalk phenomenon of a 3D stereoscopic image is removed.

## Description

### CROSS-REFERENCE TO RELATED APPLICATION

This application claims priority from Korean Patent Application No. 10-2011-0105492, filed on October 14, 2011 in the Korean Intellectual Property Office, the disclosure of which is incorporated herein by reference in its entirety.

### BACKGROUND

### 1. Field

Methods and apparatuses consistent with exemplary embodiments relate to an image output apparatus and a method for outputting an image thereof, and more particularly, to an image output apparatus which outputs a left-eye image and a right-eye image alternately in order to display a 3-dimensional (3D) stereoscopic image, and a method for outputting an image thereof.

### 2. Description of the Related Art

A liquid crystal display (LCD) requires a constant time to drive a target grayscale level of an image frame since it has a response time. In particular, if a change in the grayscale level of the image frame is considerable, the LCD has a problem that a next image frame is output before the LCD reaches the target grayscale level.

In order to solve this problem, a related-art method has improved a response speed of the LCD or has used dynamic capacitance compensation (DCC) technology. The DCC technology is to adjust a grayscale value of a current image frame to be greater than or less than a real grayscale value compared to a previous image frame, so that a liquid crystal can respond in one frame. However, there is a limit in improving the response speed of the liquid crystal of the LCD due to a physical characteristic of the liquid crystal, and, even if the DCC technology is applied, there exists a target grayscale level that could not obtain a desirable response speed. To this end, if a 3D stereoscopic image is output, a crosstalk phenomenon, in which a left-eye image and a right-eye image overlap each other, may occur.

Therefore, there is a demand for a method for outputting an image which addresses the above problems.

### SUMMARY

One or more exemplary embodiments may overcome the above disadvantages and other disadvantages not described above. However, it is understood that one or more exemplary embodiments are not required to overcome the disadvantages described above, and may not overcome any of the problems described above. According to the present invention there is provided an apparatus and method as set forth in the appended claims. Other features of the invention will be apparent from the dependent claims, and the description which follows.

One or more exemplary embodiments provide an image output apparatus which can adjust an input grayscale value of a current image frame using a difference in grayscale values between the current image frame and a previous image frame in order to remove a crosstalk phenomenon, and output an image, and a method for outputting an image thereof.

According to an aspect of an exemplary embodiment, there is provided a method for outputting an image of an image output apparatus, the method including: adjusting at least one of a maximum grayscale value and a minimum grayscale value of a current image frame according to grayscale values of the current image frame and a previous image frame, and adjusting a grayscale of the current image frame according to an input and output grayscale function having the maximum grayscale value and the minimum grayscale value which has been adjusted, and outputting the current image frame.

The method may further include determining whether a difference in the grayscale values between the current image frame and the previous image frame is greater than or equal to a pre-set value or not. The determining may include determining whether the difference in the grayscale values is greater than or equal to the pre-set value for every pixel of the current image frame and the previous image frame, and the adjusting may include adjusting at least one of the maximum grayscale value and the minimum grayscale value according to a number of pixels in which the difference in the grayscale values is greater than or equal to the pre-set value.

The adjusting may include decreasing the maximum grayscale value and increasing the minimum grayscale value, if the number of pixels in which the difference in the grayscale values is greater than or equal to the pre-set value increases.

The pre-set value may be changed according to the grayscale value of the current image frame.

The determining may include, using a dynamic capacitance compensation (DCC) lookup table which matches DCC values of the current image frame according to the grayscale values of the current image frame and the previous image frame and stores the DCC values, determining whether a DCC value of the current image frame is included in a pre-set region of the DCC lookup table, and the adjusting may include adjusting at least one of the maximum grayscale value and the minimum grayscale value of the current image frame according to whether the DCC values are included in the pre-set region of the DCC lookup table.

The adjusting may include: if the DCC values are included in the pre-set region of the DCC lookup table and if a grayscale value of the current image frame is lower than a first boundary value, adjusting the minimum grayscale value of the current image frame, and, if the DCC value is included in the pre-set region of the DCC lookup table and if a grayscale value of the current image frame is higher than a second boundary value, adjusting the maximum grayscale value of the current image frame.

The input and output grayscale function may be one of a linear function and a non-linear function according to a user's setting.

The current image frame may be one of a left-eye image and a right-eye image of a 3D image, and the previous image frame may be the other one of the left-eye image and the right-eye image of the 3D image.

According to an aspect of another exemplary embodiment, there is provided an image output apparatus, including: an image input unit which receives a current image frame and a previous image frame, an adjustment unit which adjusts at least one of a maximum grayscale value and a minimum grayscale value of the current image frame according to grayscale values of the current image frame and the previous image frame, a generation unit which generates an input and output grayscale function having the maximum grayscale value and the minimum grayscale value which have been adjusted, and an output unit which adjusts a grayscale of the current image frame according to the input and output grayscale function generated by the generation unit and outputs the current image frame.

The image output apparatus may further include a determination unit which determines whether a difference in the grayscale values between the current image frame and the previous image frame is greater than or equal to a pre-set value. The determination unit may determine whether the difference in the grayscale values is greater than or equal to the pre-set value for every pixel of the current image frame and the previous image frame, and the adjustment unit may adjust at least one of the maximum grayscale value and the minimum grayscale value according to a number of pixels in which the difference in the grayscale values is greater than or equal to the pre-set value.

The adjustment unit may decrease the maximum grayscale value and increase the minimum grayscale value, if the number of pixels in which the difference in the grayscale values is greater than or equal to the pre-set value increases.

The pre-set value may be changed according to the grayscale value of the current image frame.

The image output apparatus may further include a DCC lookup table which matches DCC values of the current image frame according to the grayscale values of the current image frame and the previous image frame and stores the DCC values. The determination unit may determine whether a DCC value of the current image frame is included in a pre-set region of the DCC lookup table using the DCC lookup table, and the adjustment unit may adjust at least one of the maximum grayscale value and the minimum grayscale value of the current image frame according to whether the DCC value is included in the pre-set region of the DCC lookup table.

If the DCC value is included in the pre-set region of the DCC lookup table and if a grayscale value of the current image frame is lower than a first boundary value, the adjustment unit may adjust the minimum grayscale value of the current image frame, and, if the DCC value is included in the pre-set region of the DCC lookup table and if a grayscale value of the current image frame is higher than a second boundary value, the adjustment unit may adjust the maximum grayscale value of the current image frame.

The generation unit may generate one of a linear function and a non-linear function according to a user's setting.

The current image frame may be one of a left-eye image and a right-eye image of a 3D image, and the previous image frame may be the other one of the left-eye image and the right-eye image of the 3D image.

### BRIEF DESCRIPTION OF THE DRAWING FIGURES

The above and/or other aspects will be more apparent by describing in detail exemplary embodiments, with reference to the accompanying drawings, in which:
FIG. 1 is a block diagram illustrating an image output apparatus according to an exemplary embodiment;
FIG. 2 is a view illustrating a DCC lookup table according to an exemplary embodiment;
FIGS. 3A to 3C are views illustrating input and output grayscale functions according to various exemplary embodiments; and
FIG. 4 is a flowchart illustrating a method for outputting an image of an image output apparatus according to an exemplary embodiment.

### DETAILED DESCRIPTION OF EXEMPLARY EMBODIMENTS

Hereinafter, exemplary embodiments will be described in greater detail with reference to the accompanying drawings.

In the following description, same reference numerals are used for the same elements when they are depicted in different drawings. The matters defined in the description, such as detailed construction and elements, are provided to assist in a comprehensive understanding of exemplary embodiments. Thus, it is apparent that exemplary embodiments can be carried out without those specifically defined matters. Also, functions or elements known in the related art are not described in detail since they would obscure the exemplary embodiments with unnecessary detail.

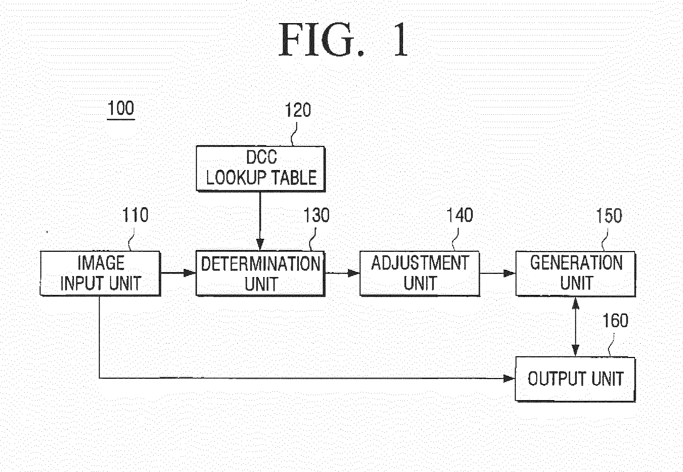

FIG. 1 is a block diagram illustrating an image output apparatus 100 according to an exemplary embodiment. As shown in FIG. 1, the image output apparatus 100 includes an image input unit 110, a dynamic capacitance compensation (DCC) lookup table 120, a determination unit 130, an adjustment unit 140, a generation unit 150, and an output unit 160. The image output apparatus 100 may be, but is not limited to, a 3-dimensional (3D) display apparatus or a set-top box which outputs a 3D image. For example, the 3D display apparatus may a 3D TV, a mobile phone that has a 3D function, or a monitor that has a 3D function. Moreover, while not required in all aspects, one or more units of the image output apparatus 100 can include a processor or microprocessor executing a computer program stored in a computer-readable medium. The computer-readable medium is any data storage device that can store data that can be thereafter read by a microprocessor. Examples of the computer-readable medium include read-only memory (ROM), random-access memory (RAM), nonvolatile memory, volatile memory, CD-ROMs, magnetic tapes, floppy disks, and optical data storage devices.

The image input unit 110 receives image data from an external source (for example, a broadcasting station or a digital versatile disc (DVD) player). At this time, the image data may be 3D stereoscopic image data which includes a left-eye image frame and a right-eye image frame.

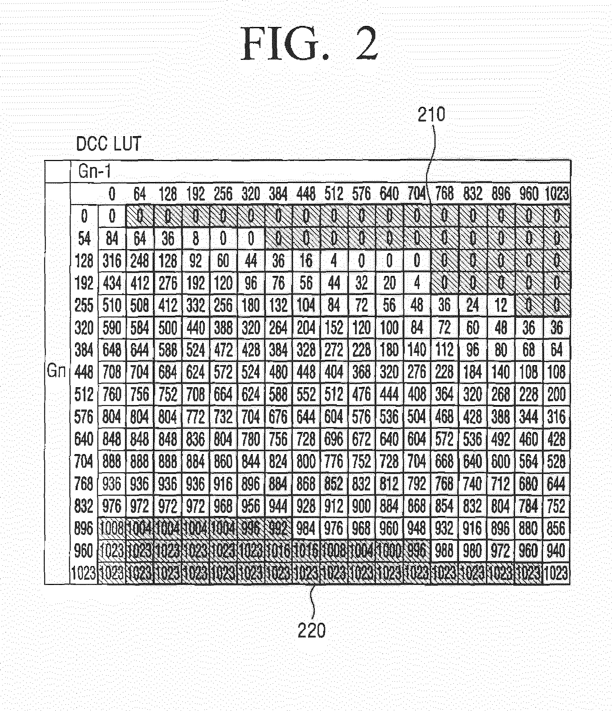

The DCC lookup table 120, which is a lookup table to apply DCC technology to image frames, matches DCC values of a current image frame according to grayscale values of the current image frame and a previous image frame and stores the DCC values. For example, if an image frame of 10 bits is input, a DCC lookup table shown in FIG. 2 may be stored. According to the DCC lookup table of FIG. 2, if a grayscale value of a previous image frame (Gₙ₋₁) is 0 and a grayscale value of a current image frame (Gₙ) is 960, a DCC grayscale value is matched as 1023 (G_{DCC}) and is stored.

The determination unit 130 determines whether a difference in grayscale values between an image frame that is currently input through the image input unit 110 (hereinafter, referred to as a 'current image frame') and an image frame that is input right before the current image frame (hereinafter, referred to as a 'previous image frame") is greater than or equal to a pre-set value or not. The grayscale value may refer to a grayscale value of a pixel, an average grayscale value of a specific block of a display screen, or an average grayscale value of an entire display screen. According to an exemplary embodiment, the previous image frame may be an image frame (N-1) which is input right before a current image frame (N). However, this is merely an example and the present disclosure can be applied to an image frame (N-2) which is input two frames earlier than the current image frame (N).

The pre-set value may not be a constant value and may be changed according to the grayscale value of the current image frame. For example, if the grayscale value of the current image frame is very high (for example, 960∼1203) or very low (for example, 0-63), the pre-set value may decrease. This is because there is a high possibility that a crosstalk phenomenon occurs if the grayscale value of the current image frame is very high or very low, regardless of whether the difference in the grayscale values between the current image frame and the previous image frame is small.

Also, the determination unit 130 may determine whether the difference in the grayscale values between the current image frame and the previous image frame is greater than or equal to the pre-set value using the DCC lookup table 120.

Specifically, the determination unit 130 may determine whether a DCC value obtained based on the grayscale values of the current image frame and the previous image frame is included in a first region 210 or a second region 220 of the DCC lookup table shown in FIG. 2, and may determine whether the difference in the grayscale values between the current image frame and the previous image frame is greater than or equal to the pre-set value. The first region 210 refers to a region in which the grayscale value of the current image frame is lower than a first boundary value (for example, 256) and a crosstalk phenomenon occurs due to the difference in the grayscale values between the current image frame and the previous image frame. Also, the second region 220 is a region in which the grayscale value of the current image frame is higher than a second boundary value (for example, 896) and a crosstalk phenomenon occurs due to the difference in the grayscale values between the current image frame and the previous image frame.

If the DCC value is included in the first region 210 or the second region 220 of the DCC lookup table, the determination unit 130 determines that the difference in the grayscale values between the current image frame and the previous image frame is greater than or equal to the pre-set value. However, if the DCC value is neither included in the first region 210 nor the second region 220 of the DCC lookup table, the determination unit 130 determines that the difference in the grayscale values between the current image frame and the previous image frame is less than the pre-set value.

The DCC lookup table shown in FIG. 2 is merely an example and the present disclosure can be applied to a different DCC lookup table (for example, a DCC lookup table in which grayscale values are more minutely segmented).

Also, the determination unit 130 may determines whether the difference in the grayscale values is greater than or equal to the pre-set value for every pixel of the current image frame and the previous image frame.

The adjustment unit 140 adjusts at least one of a maximum grayscale value (Vₘₐₓ) and a minimum grayscale value (Vₘᵢₙ) of the current image frame according to a result of the determining by the determination unit 130. Specifically, if the difference in the grayscale values between the current image frame and the previous image frame is greater than or equal to the pre-set value, the adjustment unit 140 adjusts at least one of the maximum grayscale value and the minimum grayscale value of the current image frame.

In particular, if the number of pixels in which the difference in the grayscale values between the current image frame and the previous image frame is greater than or equal to the pre-set value increases, the adjustment unit 140 decreases the maximum grayscale value and increases the minimum grayscale value. This is because there is a high possibility that a crosstalk phenomenon occurs if the number of pixels in which the difference in the grayscale values between the current image frame and the previous image frame is greater than or equal to the pre-set value increases.

Also, the adjustment unit 140 may adjust at least one of the maximum grayscale value and the minimum grayscale value of the current image frame according to a result of the determining using the DCC lookup table. Specifically, if it is determined that the DCC value is included in the first region 210 or the second region 220 of the DCC lookup table, the adjustment unit 140 may adjust at least one of the maximum grayscale value and the minimum grayscale value of the current image frame. If the DCC value exists in the first region 210 of the DCC lookup table, the adjustment unit 140 may adjust the minimum grayscale value of the current image frame. Also, if the DCC value exists in the second region 220 of the DCC lookup table, the adjustment unit 140 may adjust the maximum grayscale value of the current image frame. Also, if DCC values for a plurality of pixels exist in both the first region 210 and the second region 220, the adjustment unit 140 may adjust the minimum grayscale value and the maximum grayscale value of the current image frame simultaneously.

The generation unit 150 generates an input and output grayscale function having the maximum grayscale value and the minimum grayscale value which have been adjusted by the adjustment unit 140. For example, if an image frame of 10 bits is input, the maximum grayscale value of the image frame is 1023 and the minimum grayscale value of the image frame is 0. If the determination unit 130 determines that the difference in the grayscale values between the previous image frame and the current image frame is greater than or equal to the pre-set value, the adjustment unit 140 adjusts the maximum grayscale value (Vₘₐₓ) to be lower than 1023 and adjusts the minimum grayscale value (Vₘᵢₙ) to be higher than 0. The generation unit 150 generates the input and output grayscale function so that the grayscale values of the input current image frame are changed to have the adjusted maximum grayscale value and minimum grayscale value and are output. In particular, the related-art method outputs grayscale values of an input current image frame as they are, whereas the input and output grayscale function according to the present exemplary embodiment adjusts the maximum grayscale value and the minimum grayscale value of the output grayscale values of the current image frame. Accordingly, the output grayscale value of the current image frame is adjusted to be higher than a general output grayscale value in a section in which the input grayscale value is low, and is adjusted to be lower than the general output grayscale value in a section in which the input grayscale value is high. Accordingly, since the difference in the grayscale values between the previous image frame and the current image frame is not great, a crosstalk phenomenon can be reduced.

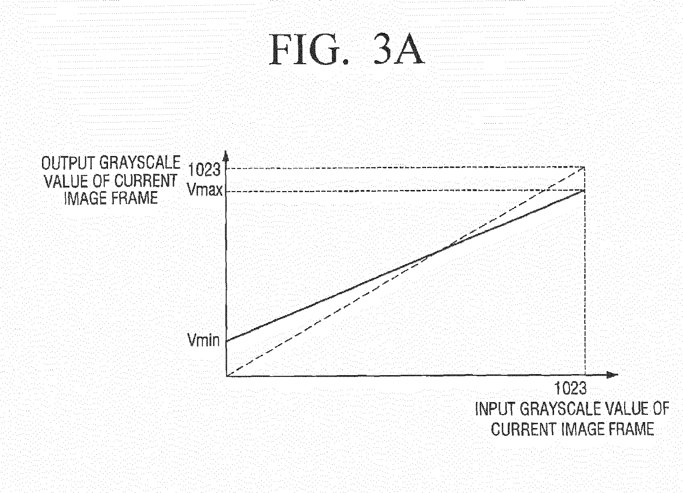

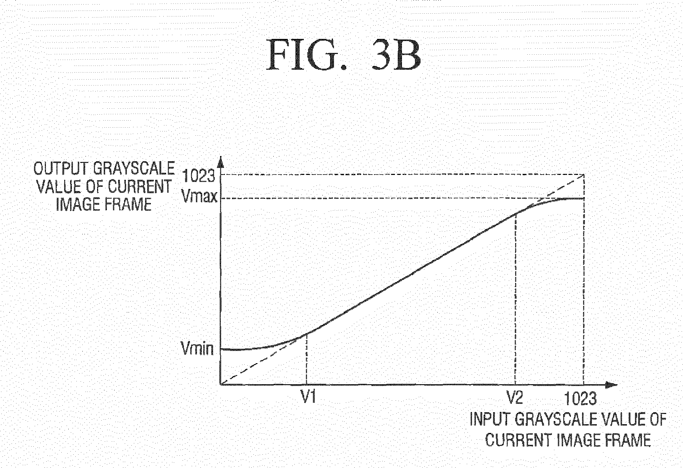

At this time, the generation unit 150 may generate the input and output grayscale function as a linear function or a non-linear function. Specifically, the generation unit 150 may generate a linear input and output grayscale function in which the maximum grayscale value (Vₘₐₓ) and the minimum grayscale value (Vₘᵢₙ) are adjusted as shown in FIG. 3A. The generation unit 150 may generate a non-linear input and output grayscale function in which the maximum grayscale value (Vₘₐₓ) and the minimum grayscale value (Vₘᵢₙ) are adjusted as shown in FIG. 3B. If the linear input and output grayscale function is applied, all of the input grayscale values of the current image frame are changed and output. However, if the non-linear input and output grayscale function is applied, the output grayscale values for some section (V₁∼V₂) of the current image frame are the same as the input grayscale values, but, the output grayscale values for a section (1∼V1) in which the input grayscale values are low and for a section (V₂∼1023) in which the input grayscale values are high are different from the input grayscale values.

The generation unit 150 may generate the input and output grayscale function as one of the linear function and the non-linear function according to a user's setting.

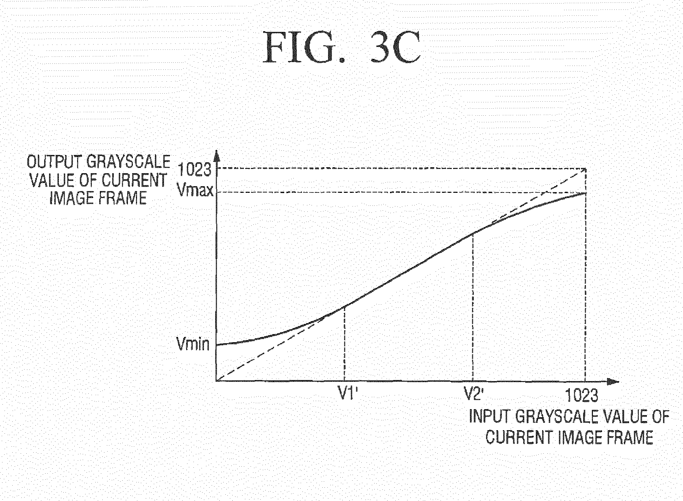

Also, the generation unit 150 may change a length and a curvature of the non-linear sections (0∼V₁ and V₂∼1023) of the non-linear function according to a user's manipulation. For example, if a user's manipulation to change the non-linear function is input, the generation unit 150 may change the non-linear function shown in FIG. 3B into the non-linear function shown in FIG. 3C. That is, as shown in FIGS. 3B and 3C, the length of the non-linear sections (0∼V₁' and V₂'∼1023) after change is longer than that of the non-linear sections (0∼V₁ and V₂∼1023) before change. Also, the curvature of the non-linear sections (0∼V₁' and V₂'∼1023) after change is gentler than that of the non-linear section (0∼V₁ and V₂∼1023) before change. As described above, the input and output grayscale function is changed according to the user's setting so that an image with quality desired by a user can be displayed.

Although the input and output grayscale functions explained in FIGS. 3A to 3C have both the maximum grayscale value and the minimum grayscale value changed, this is merely an example. The present disclosure can be applied to an input and output grayscale function having at least one of the maximum grayscale value and the minimum grayscale value changed.

The output unit 160 adjusts a grayscale of the current image frame according to the input and output grayscale function generated by the generation unit 150 and outputs an image. At this time, the output unit 160 may include a filter to remove a flicker phenomenon.

As described above, the image output apparatus 100 may remove the crosstalk phenomenon of the 3D stereoscopic image by changing the output grayscale of the current image frame using the difference in the grayscale values between the current image frame and the previous image frame.

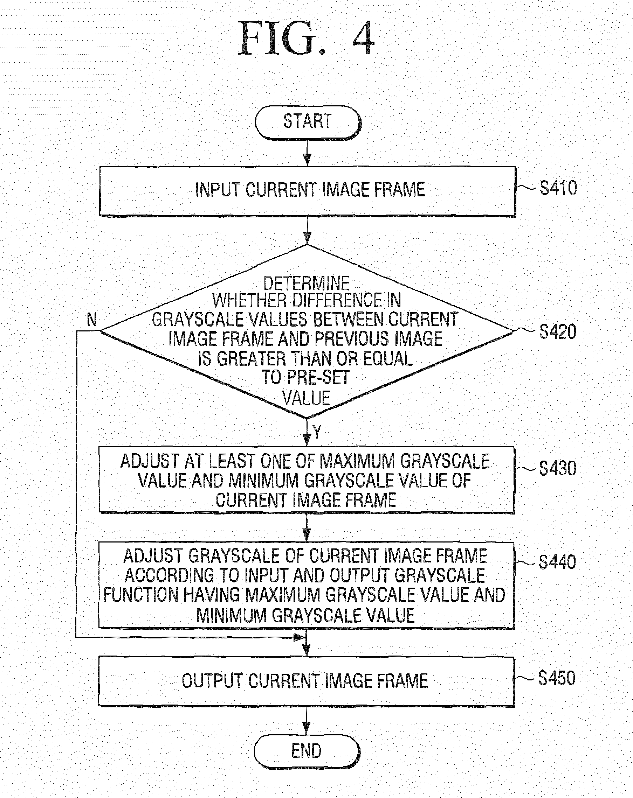

Hereinafter, a method for outputting an image of the image output apparatus 100 according to an exemplary embodiment will be explained in detail with reference to FIG. 4.

The image output apparatus 100 receives a current image frame (S410). The current image frame may be one of a left-eye image frame and a right-eye image frame of a 3D image.

The image output apparatus 100 determines whether a difference in grayscale values between the current image frame and a previous image frame is greater than or equal to a pre-set value (S420). The previous image frame is an image frame that is input right before the current image frame is input and may be the other one of the left-eye image frame and the right-eye image frame of the 3D image, which is different from the current image frame.

The pre-set value to be compared with the difference in the grayscale values may be changed according to the grayscale values of the current image frame. This is because there is a high possibility that a crosstalk phenomenon occurs in a section in which the grayscale value of the current image frame is very high or very low, even if the difference in the grayscale values between the current image frame and the previous image frame is small.

The image output apparatus 100 may compare the difference in the grayscale values with the pre-set value for every pixel of the image frame.

According to the present exemplary embodiment, the image output apparatus 100 may determine whether the difference in the grayscale values between the current image frame and the previous image frame is greater than or equal to the pre-set value using the DCC lookup table 120. Specifically, the image output apparatus 100 may determine whether a DCC value obtained based on the grayscale values of the current image frame and the previous image frame is included in the pre-set region 210 or 220 of the DCC lookup table 120, and may determine whether the difference in the grayscale values between the current image frame and the previous image frame is greater than or equal to the pre-set value.

Then, if it is determined that the difference in the grayscale values between the current image frame and the previous image frame is greater than or equal to the pre-set value (S420-Y), the image output apparatus 100 adjusts at least one of a maximum grayscale value and a minimum grayscale value of the current image frame (S430). If the number of pixels in which the difference in the grayscale values between the current image frame and the previous image frame is greater than or equal to the pre-set value increases, the image output apparatus 100 decreases the maximum grayscale value and increases the minimum grayscale value. This is because there is a high possibility that a crosstalk phenomenon occurs if the number of pixels in which the difference in the grayscale values between the current image frame and the previous image frame is greater than or equal to the pre-set value increases.

Then, the image output apparatus 100 adjusts a grayscale of the current image frame according to an input and output grayscale function having the maximum grayscale value and the minimum grayscale value of the current image frame (S440). The image output apparatus 100 may generate the input and output grayscale function as a linear function as shown in FIG. 3A or a non-linear function as shown in FIG. 3B according to a user's setting.

Then, the image output apparatus 100 outputs the current image frame in which the grayscale has been adjusted (S450).

On the other hand, if the difference in the grayscale values between the current image frame and the previous image frame is less than the pre-set value (S420-N), the image output apparatus 100 outputs the current image frame without changing the maximum grayscale value and the minimum grayscale value of the current image frame (S450).

As described above, by changing the output grayscale of the current image frame using the difference in the grayscale values between the current image frame and the previous image frame, the method can remove the crosstalk phenomenon of the 3D stereoscopic image.

The foregoing exemplary embodiments and advantages are merely exemplary and are not to be construed as limiting the present inventive concept. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

Although a few preferred embodiments have been shown and described, it will be appreciated by those skilled in the art that various changes and modifications might be made without departing from the scope of the invention, as defined in the appended claims.

## Claims

1. A method for outputting an image of an image output apparatus, the method comprising:
adjusting (S430) at least one of a maximum grayscale value and a minimum grayscale value of a current image frame according to grayscale values of the current image frame and a previous image frame; and
adjusting (S440) a grayscale of the current image frame according to an input and output grayscale function having the maximum grayscale value and the minimum grayscale value which has been adjusted, and outputting (S450) the current image frame.

2. The method as claimed in claim 1, further comprising determining (S420) whether a difference in the grayscale values between the current image frame and the previous image frame is greater than or equal to a pre-set value,
wherein the determining comprises determining whether the difference in the grayscale values is greater than or equal to the pre-set value for every pixel of the current image frame and the previous image frame, and
wherein the adjusting at least one of a maximum grayscale value and a minimum grayscale value of a current image frame comprises adjusting at least one of the maximum grayscale value and the minimum grayscale value according to a number of pixels in which the difference in the grayscale values is greater than or equal to the pre-set value.

3. The method as claimed in claim 2, wherein the adjusting at least one of a maximum grayscale value and a minimum grayscale value of a current image frame comprises decreasing the maximum grayscale value and increasing the minimum grayscale value, if the number of pixels in which the difference in the grayscale values is greater than or equal to the pre-set value increases.

4. The method as claimed in claim 2, wherein the pre-set value is changed according to the grayscale value of the current image frame.

5. The method as claimed in claim 2, wherein the determining comprises using a dynamic capacitance compensation (DCC) lookup table to match DCC values of the current image frame according to the grayscale values of the current image frame and the previous image frame, store the DCC values, and determine whether a DCC value of the current image frame is included in a pre-set region of the DCC lookup table, and
wherein the adjusting at least one of a maximum grayscale value and a minimum grayscale value of a current image frame comprises adjusting at least one of the maximum grayscale value and the minimum grayscale value of the current image frame according to whether the DCC values are included in the pre-set region of the DCC lookup table.

6. The method as claimed in claim 5, wherein the adjusting at least one of a maximum grayscale value and a minimum grayscale value of a current image frame comprises:
if the DCC values are included in the pre-set region of the DCC lookup table and if a grayscale value of the current image frame is lower than a first boundary value, adjusting the minimum grayscale value of the current image frame; and
if the DCC value is included in the pre-set region of the DCC lookup table and if a grayscale value of the current image frame is higher than a second boundary value, adjusting the maximum grayscale value of the current image frame.

7. The method as claimed in claim 1, wherein the input and output grayscale function is one of a linear function and a non-linear function according to a user's setting.

8. The method as claimed in claim 1, wherein the current image frame is one of a left-eye image and a right-eye image of a 3D image, and
wherein the previous image frame is the other one of the left-eye image and the right-eye image of the 3D image.

9. An image output apparatus (100) comprising:
an image input unit (110) which receives a current image frame and a previous image frame;
an adjustment unit (140) which adjusts at least one of a maximum grayscale value and a minimum grayscale value of the current image frame according to grayscale values of the current image frame and the previous image frame;
a generation unit (150) which generates an input and output grayscale function having the maximum grayscale value and the minimum grayscale value which have been adjusted; and
an output unit (160) which adjusts a grayscale of the current image frame according to the input and output grayscale function generated by the generation unit and outputs the current image frame.

10. The image output apparatus as claimed in claim 9, further comprising a determination unit (130) which determines whether a difference in the grayscale values between the current image frame and the previous image frame is greater than or equal to a pre-set value,
wherein the determination unit determines whether the difference in the grayscale values is greater than or equal to the pre-set value for every pixel of the current image frame and the previous image frame, and
wherein the adjustment unit adjusts at least one of the maximum grayscale value and the minimum grayscale value according to a number of pixels in which the difference in the grayscale values is greater than or equal to the pre-set value.

11. The image output apparatus as claimed in claim 10, wherein the adjustment unit decreases the maximum grayscale value and increases the minimum grayscale value, if the number of pixels in which the difference in the grayscale values is greater than or equal to the pre-set value increases.

12. The image output apparatus as claimed in claim 10, wherein the pre-set value is changed according to the grayscale value of the current image frame.

13. The image output apparatus as claimed in claim 10, further comprising a DCC lookup table (120) which matches DCC values of the current image frame according to the grayscale values of the current image frame and the previous image frame and stores the DCC values,
wherein the determination unit determines whether a DCC value of the current image frame is included in a pre-set region of the DCC lookup table using the DCC lookup table, and
wherein the adjustment unit adjusts at least one of the maximum grayscale value and the minimum grayscale value of the current image frame according to whether the DCC value is included in the pre-set region of the DCC lookup table.

14. The image output apparatus as claimed in claim 13, wherein, if the DCC value is included in the pre-set region of the DCC lookup table and if a grayscale value of the current image frame is lower than a first boundary value, the adjustment unit adjusts the minimum grayscale value of the current image frame, and, if the DCC value is included in the pre-set region of the DCC lookup table and if a grayscale value of the current image frame is higher than a second boundary value, the adjustment unit adjusts the maximum grayscale value of the current image frame.

15. The image output apparatus as claimed in claim 9, wherein the generation unit generates one of a linear function and a non-linear function according to a user's setting.
